# EUROPEAN PATENT APPLICATION

(11) **EP 4 851 230 A1**
(43) Date of publication of application: **09.12.2026**
(21) Application number: 24922144.1
(22) Date of filing: 13.11.2024
(51) Int. Cl.: C08J 5/04, B32B 5/18, B32B 5/24, B32B 5/28, B32B 7/022, B32B 7/027, B32B 27/02, B32B 27/04, B32B 27/12, B32B 27/34, D01F 6/60, D04H 3/04, D04H 3/08, D06M 15/55, D06M 15/59

(54) **REINFORCING FIBER BASE MATERIAL AND FIBER-REINFORCED COMPOSITE MATERIAL**

(30) Priority: 30.01.2024 JP 2024011705; 30.01.2024 JP 2024011706
(71) Applicant: Toray Industries, Inc., Tokyo 103-8666 (JP)
(72) Inventor: HIKOSAKA, Yuki, Nagoya-shi, Aichi 455-8502 (JP); ODANI, Hiroshi, Nagoya-shi, Aichi 455-8502 (JP)
(74) Representative: Hoefer & Partner Patentanwälte mbB
(86) International application number: PCT/JP2024/040318
(87) International publication number: WO 2025/164034

(57) **Abstract**

The present invention pertains to a reinforcing fiber base material that is provided with one or more reinforcing fiber sheets obtained by pulling and aligning reinforcing fibers in one direction, and that is integrated together by a stitching yarn that is made of an amorphous resin material and that satisfies at least one of the following conditions: the tensile modulus of the amorphous resin material is 1 GPa or more at 82°C; and the shrinkage rate of the amorphous resin material is less than 10% when being held at 130°C. The present invention also pertains to a fiber-reinforced composite material manufactured by using the reinforcing fiber base material. A fiber-reinforced composite material according to the present invention has excellent compressive strength in moist-heat environments, suppresses occurrence of microcracks after a cold-hot cycle, and has excellent durability.

## Description

### Technical Field of the Invention

The present invention relates to a reinforcing fiber base material used for aircraft/aerospace and general industrial applications, and to a fiber-reinforced composite material manufactured using the same.

### Background Art of the Invention

Fiber-reinforced composite materials (FRP) are widely used in aircraft and sports cars due to their excellent weight reduction potential. In particular, for structural materials that bear loads, prepregs, which are intermediate base materials made by impregnating aligned reinforcing fibers with a matrix resin, have conventionally been commonly used. However, in recent years, due to the demand for high productivity, the applications of resin injection molding methods such as resin transfer molding (RTM) and VaRTM (vacuum-assisted resin transfer molding) have been expanding. Resin injection molding method is a molding method in which a laminate of dry reinforcing fiber base materials is placed in a mold, and a liquid matrix resin is injected, impregnated, and solidified within the mold to manufacture an FRP.

In case of using a resin injection molding method for structural materials, a non-crimp fabric (NCF), in which one or more layers of reinforcing fiber sheets each aligned in one direction are laminated and they are stitched and integrated in the thickness direction using a stitching yarn, is often used as the reinforcing fiber base material. NCF exhibits high mechanical properties due to the small waviness of the reinforcing fibers, and also improves the efficiency of the lamination process. On the other hand, especially in case of using it for structural materials for aircraft, it still lacks the compressive strength, long-term durability, and impact resistance, as compared with prepregs.

Patent document 1 discloses fiber-reinforced composite material that suppresses microcracks by using a fine stitching yarn of 30 dtex or less. However, even if this technology is used, the resistance to cold-hot cycles is insufficient, and the compressive property under moist-heat conditions is insufficient.

Patent document 2 discloses a method for manufacturing a fiber-reinforced composite material that suppresses microcracks when providing a cold-hot cycle by establishing a specific relationship between the melting point of the stitching yarn and the curing behavior of the matrix resin. However, because a stitching yarn made of a crystalline resin with a low glass transition temperature (Tg) and melting point is employed, the compressive properties, especially under moist-heat conditions, are insufficient, and the morphological stability of the reinforcing fiber base material at high temperatures, as well as the moldability such as resin impregnation and appearance quality depending on the molding conditions, are insufficient.

Patent document 3 discloses a reinforcing fiber base material that improves adhesion with the matrix resin and suppresses microcracks by applying an oil to the surface of the stitching yarn. However, because a step of applying an oil to the stitching yarn is required, there remain problems in productivity, and depending on the heat resistance of the stitching yarn, the compressive strength under moist-heat conditions may be insufficient.

Patent document 4 discloses a highly durable fiber-reinforced composite material excellent in hydrolysis resistance and heat aging resistance by applying a stitching yarn with a high hydrolysis resistance. However, because it uses a high-melting-point crystalline resin, the cold-hot cycle durability is insufficient.

### Prior art documents

### Patent documents

Patent document 1: JP-B-5599407
Patent document 2: WO 2022/265727
Patent document 3: JP-A-2022-23119
Patent document 4: WO 2020/031834

### Summary of the Invention

### Problems to be solved by the Invention

An object of the present invention is to solve the defects of the prior art and to provide a reinforcing fiber base material, which can stabilize the form at high temperatures while maintaining excellent productivity, and simultaneously satisfy mechanical properties, particularly excellent compressive properties under moist-heat conditions, and durability during cold-hot cycles, which have been conventionally difficult to achieve together, and a fiber-reinforced composite material using the same.

### Means for solving the Problems

To achieve the above-described object, the present invention has the following configurations.
[1] A reinforcing fiber base material comprising one or more components [A] each formed by aligning reinforcing fibers in one direction, integrated with a component [B], and simultaneously satisfying the following condition 1 and at least one of condition 2 or condition 3.
   [A]: reinforcing fiber sheet
   [B]: stitching yarn

   Condition 1: The component [B] is made of an amorphous resin material.
   Condition 2: The tensile modulus of the amorphous resin material constituting the component [B] at 82°C is 1 GPa or more.
   Condition 3: The shrinkage rate of component [B] when held at 130°C is less than 10%.
[2] The reinforcing fiber base material according to [1], wherein the amorphous resin material constituting the component [B] is an amorphous polyamide.
[3] The reinforcing fiber base material according to [2], wherein the glass transition temperature of the amorphous resin material constituting the component [B] is 140 to 165°C.
[4] The reinforcing fiber base material according to any one of [1] to [3], wherein the fineness of the component [B] is 20 to 60 dtex.
[5] The reinforcing fiber base material according to any one of [1] to [4], wherein a porous material comprising a thermoplastic resin is disposed on at least one surface of the component [A].
[6] The reinforcing fiber base material according to [5], wherein the thermoplastic resin constituting the porous material is an amorphous polyamide, and the mass w2 [g/m²] per unit area of the porous material and the amount w1 [g/m²] of the component [B] used per unit area of the reinforcing fiber base material according to [5] are related by the following equation (1). $1 \leq w 2 / w 1 \leq 5$ (1)
[7] A reinforcing fiber composite material obtained by impregnating and curing a thermosetting resin into a reinforcing fiber laminate formed by laminating a plurality of reinforcing fiber base materials according to any one of [1] to [6].
[8] The reinforcing fiber composite material according to [7], wherein the coefficient of thermal expansion α_{E} of a cured product of the thermosetting resin is 100 × 10⁻⁶ or less, and the relationship with the coefficient of thermal expansion α_{S} of the amorphous resin material constituting the component [B] satisfies the following equation (2). $2 \times {α}_{E} < {α}_{S}$ (2)

### Effect according to the Invention

The reinforcing fiber base material and the fiber-reinforced composite material obtained using it of the present invention, can stabilize the form of the reinforcing fiber base material, especially at high temperatures, while maintaining excellent productivity, and are excellent in compressive strengths under room-temperature and moist-heat environments, the occurrence of microcracks after cold-hot cycles is suppressed, and they are excellent in durability. Therefore, it enables further weight reduction of structures to which the fiber-reinforced composite materials are applied, while maintaining high mechanical properties. Further, the reinforcing fiber base material of the present invention can be suitably used for manufacturing fiber-reinforced composite materials by resin injection molding.

### Brief explanation of the drawings

[Fig. 1] Fig. 1 is a conceptual diagram showing a structure of a reinforcing fiber base material.
[Fig. 2] Fig. 2 is a conceptual diagram showing a structure of a reinforcing fiber sheet.

### Embodiments for carrying out the Invention

Hereinafter, the present invention will be explained in detail together with embodiments referring to figures.

The reinforcing fiber base material of the present invention is formed by laminating one or more reinforcing fiber sheets as component [A] and integrating them with a stitching yarn as component [B]. First, the component [A] will be explained.

### (Component [A])

A component [A] in the present invention is a reinforcing fiber sheet. The component [A] has a form of a unidirectional sheet in which multifilament yarns made of reinforcing fibers are aligned in one direction to form a sheet having a predetermined weight per unit area (areal weight). By making it a unidirectional sheet, because the bending of the reinforcing fibers can be suppressed, the compressive strength of a reinforcing fiber composite material using the reinforcing fiber base material of the present invention can be increased.

A form of a unidirectional sheet can be obtained by arranging reinforcing fibers in a manner aligned along their fiber axes. The arranged reinforcing fibers constituting the unidirectional sheet may or may not be bound and fixed together. If they are not bound and fixed together, at a state where a tension is applied in the fiber axis direction, they are laminated with another unidirectional sheet as described later and integrated with a stitching yarn. There are no particular restrictions on the method of binding and fixing together the arranged reinforcing fibers constituting the unidirectional sheet, and exemplified is fixing with binder particles or fixing with a supporting yarn. Where, the supporting yarn may be made of the same material as component [B] described later.

The reinforcing fiber used in such a reinforcing fiber sheet is not particularly limited, and glass fiber, carbon fiber, aramid fiber, boron fiber, alumina fiber, silicon carbide fiber, etc., can be used. Two or more of these fibers may be used in combination. From the viewpoint of obtaining a lightweight and high-rigid fiber-reinforced composite material, it is preferable to use a carbon fiber.

The weight per unit area of the reinforcing fiber sheet of the present invention, so-called the areal weight, is preferably 50 to 800 g/m², more preferably 100 to 600 g/m², and particularly preferably 150 to 350 g/m². By controlling the areal weight within such a range, a good balance is achieved between lamination efficiency, resin impregnation, and shaping ability.

### (Component [B])

In the present invention, the component [B] is a stitching yarn. The component [B] must be composed of an amorphous resin material. As described later, the stitching yarn stitches and integrates the reinforcing fiber sheet to form a reinforcing fiber base material, and therefore exists continuously in the thickness direction and in-plane direction within the reinforcing fiber base material. By using an amorphous resin material with specific properties for the stitching yarn of the reinforcing fiber base material, a fracture started near the stitching yarn becomes less likely, and a fiber-reinforced composite material excellent in durability can be obtained which exhibits an excellent compressive strength, especially in moist-heat environments, and suppresses the occurrence of microcracks after cold-hot cycles.

Here, "amorphous" in the present invention indicates a material in which the enthalpy of fusion, measured using differential scanning calorimetry in accordance with JIS K7121 (2012) at a heating rate of 10 °C/min, is less than 5 J/g.

As such an amorphous resin material constituting the component [B], an amorphous polyamide can be suitably used because it offers an excellent balance of heat resistance and durability.

As such an amorphous polyamide, polyamides 4I, 6I, 9I, and 12I can be used, as well as polyamides having 4,4'-diaminodicyclohexylmethane and/or its derivatives and aromatic or aliphatic dicarboxylic acids as constituent components, which have good compatibility with the matrix resin and excellent adhesive properties. As the polyamides having 4,4'-diaminodicyclohexylmethane and/or its derivatives and aromatic or aliphatic dicarboxylic acids as constituent components, "Grilamid" TR90, TR55, TR30, XE4003 (all supplied by EMS-CHEMIE (Japan) Ltd.), "TROGAMIDO" CX7323, CX9701, CX9704 (all supplied by Daicel Evonik Co., Ltd.), and the like, can be used.

In the present invention, the amorphous resin material used in the component [B] preferably has a glass transition temperature (hereinafter, Tg) in a range of 140°C to 165°C. A fiber-reinforced composite material obtained using a stitching yarn (component [B]) made of an amorphous resin material in such a range can achieve a better balance between excellent compressive strength in a moist-heat condition and suppression of microcracks after a cold-hot cycle.

The above-described Tg can be measured, for example, using DSC in accordance with JIS K 7121 (2012).

Further, the component [B] in the present invention simultaneously satisfies condition 1, which is made of an amorphous resin material as described above, and at least one of the following conditions 2 or 3.
Condition 2: The tensile modulus of the amorphous resin material constituting the component [B] at 82°C is 1 GPa or more.
Condition 3: The shrinkage rate of component [B] when held at 130°C is less than 10%.

In case where the component [B] in the present invention is composed of an amorphous resin material whose tensile modulus at 82°C during humidity control is 1 GPa or more, as in condition 2 above, the fiber-reinforced composite material obtained using the reinforcing fiber base material of the present invention can exhibit an excellent compressive strength because the stitching yarn does not become a weak point, especially in a moist-heat environment. Further, it is preferable to control the tensile modulus of such an amorphous resin material at 82°C during humidity control to 2 GPa or less, because this can effectively suppress stress concentration at the interface with the matrix resin, especially in a moist-heat environment, and thus exhibit an excellent compressive strength.

Here, the above-described tensile modulus can be measured, for example, by performing a tensile test on a resin plate prepared by processing the amorphous resin material constituting the component [B] into a dumbbell shape, in accordance with JIS K7161 (1994).

Further, in case where the component [B] in the present invention is composed of an amorphous resin material in which the shrinkage rate in the fiber axis direction when held at 130°C is less than 10% as in condition 3 described above, by being within such a range, since in the reinforcing fiber base material of the present invention orientation disorder of the reinforcing fibers due to the dimensional changes of the stitching yarn in a high-temperature environment can be suppressed, the form of the reinforcing fiber base material can be stabilized and excellent compressive strengths at both room-temperature and moist-heat environments can be exhibited.

Here, the shrinkage rate in the fiber axis direction when held at 130°C can be calculated, for example, by measuring a dimensional change rate after processing the component [B] in a 130°C dryer, according to the measurement method for dry dimensional change rate under heating in JIS L1013 (2010).

Furthermore, the fineness of the component [B] in the present invention is preferably 20 to 60 dtex, and more preferably 20 to 40 dtex. By being within such a range, it is possible to minimize the bending of the reinforcing fibers while improving the impregnation property of the resin in a resin injection molding.

The form of the component [B] is not particularly restricted, but from the viewpoint of weaving properties and shaping ability of the reinforcing fiber base material, it is preferable that it is composed of a multifilament yarn. Furthermore, the number of filaments contained in such a multifilament yarn is preferably 4 to 20. By being within such a range, the occurrence of microcracks after a cold-hot cycle is more suppressed, and the processability such as shaping ability or impregnation property can be improved.

Further, the component [B] is preferably twisted in order to enhance the impregnation property of the matrix resin into the reinforcing fiber base material. The number of twists per one meter of the stitching yarn is more preferably 100 or more.

Here, the stitching yarn can be produced by known methods such as melt spinning, dry spinning, or wet spinning.

### (Reinforcing fiber base material)

The reinforcing fiber base material of the present invention is formed by laminating one or more components [A] and integrating them with component [B], and as described above, it simultaneously satisfies that the component [B] is an amorphous resin material (condition 1), and at least one of that the elastic modulus of the amorphous resin material constituting the component [B] at 82°C is 1 GPa or more (condition 2), or that the shrinkage rate of the component [B] when held at 130°C is less than 10% (condition 3).

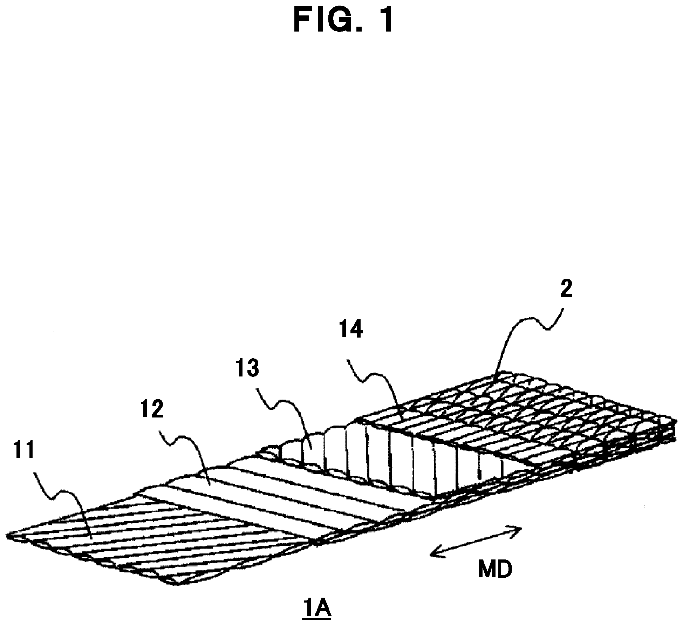

Fig. 1 shows a schematic perspective view of one embodiment of the reinforcing fiber base material of the present invention when two or more reinforcing fiber sheets are laminated. From the lower surface of a reinforcing fiber base material 1A, the reinforcing fibers constituting reinforcing fiber sheets 11, 12, 13 and 14 are laminated such that their fiber axes are set in the order of -45°, 90°, +45°, and 0° with respect to the longitudinal direction MD of the reinforcing fiber base material 1A, and are sewn and integrated with a stitching yarn 2. The lamination structure of the reinforcing fiber base material of the present invention is not limited to this. It is preferred that the fiber axis directions of the reinforcing fibers constituting adjacent reinforcing fiber sheets in the thickness direction of the reinforcing fiber base material are different from each other, and it is particularly preferable from the viewpoint of mechanical properties that the fiber axis directions are appropriately selected from 0°, +45°, -45° and 90°. Further, although in Fig. 1 a configuration in which four reinforcing fiber sheets are laminated is explained, the configuration of the reinforcing fiber base material of the present invention is not limited thereto, and arbitrary number of sheets can be laminated. However, from the viewpoint of conformability to changes in shape, such as changes in plate thickness, when applied to a structure, it is preferable to limit the number of sheets to about eight.

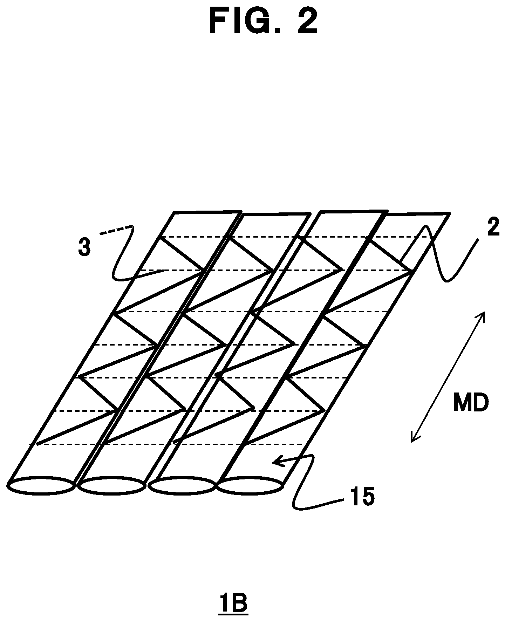

Fig. 2 shows a schematic perspective view of one embodiment of the reinforcing fiber base material of the present invention, in case where one reinforcing fiber sheet is used. From the lower surface of a reinforcing fiber base material 1B, the fiber axes of the reinforcing fibers constituting a reinforcing fiber sheet 15 are laminated at 0° with respect to the longitudinal direction MD of the reinforcing fiber base material 1B, and are sewn and integrated with the stitching yarn 2. In case where the number of laminated layers is one, it is preferred to contain a supporting yarn 3 in order to improve the formation stability of the base material. In Fig. 2, the fiber axes of the supporting yarn are arranged on the lower surface of the reinforcing fiber base material at a direction of 90° with respect to MD, but it is not limited thereto, and it may be acceptable as long as they are arranged at a different angle from the fiber axes of the reinforcing fiber sheet. Further, the supporting yarn can be applied with glass fiber, carbon fiber, thermoplastic resin fiber, etc.

In the reinforcing fiber base material of the present invention, as the method of integration using the stitching yarn, tricot knitting, chain knitting, warp knitting using patterns combining these, weft knitting using a sewing machine, and the like, can be employed. Among these, warp knitting is preferred as it can satisfy both handling ability and shaping ability of the reinforcing fiber base material, and tricot knitting is particularly preferred because it can obtain a high shaping ability.

The amount of the component [B], namely the stitching yarn, used per unit area of the reinforcing fiber base material of the present invention: w1 (g/m²), is preferably 1 to 10 g/m², and more preferably 1 to 5 g/ m². By being within such a range, a good balance between the handling property of the base material, the impregnation property of the matrix resin, and the compression property of the reinforcing fiber composite material can be obtained. The weight of the stitching yarn per unit area is determined by the conditions when sewing the reinforcing fiber sheet (seam pattern, pitch, stitch length, etc.) and can be calculated from the amount of the stitching yarn used when obtaining the reinforcing fiber base material per 1 m².

In the reinforcing fiber base material of the present invention, it is preferred that a porous material comprising a thermoplastic resin is disposed on at least one surface of the component [A], i.e., the reinforcing fiber sheet. By this configuration, it is possible to improve the impact resistance of the fiber-reinforced composite material obtained using the reinforcing fiber base material of the present invention. As the form of the porous material, for example, exemplified are nonwoven fabric, mat, net, mesh, woven fabric, knitted fabric, short fiber cluster, perforated film, porous film, and the like. Further, the mass w2 (g/m²) per unit area of the porous material is preferably in a range of 1 to 10 g/m². By being within this range, a fiber-reinforced composite material excellent in balance between compressive strength and impact resistance can be obtained.

The thermoplastic resin constituting the porous material is selected from the group consisting of, for example, polyamide resin, amorphous polyamide resin, polyester resin, polyphenylene sulfide resin, polyetherimide resin, polyethersulfone resin, polyvinyl formal resin, polyetheretherketone resin, polycarbonate resin, polysulfone resin, polyphenylene ether resin, polyimide resin, polyamideimide resin, and phenoxy resin.

In particular, the thermoplastic resin constituting the porous material is preferably an amorphous polyamide that can achieve a good balance between impact resistance and compression property under a moist-heat environment at a high level. As the amorphous polyamides, exemplified are polyamides 4I, 6I, 9I, and 12I, and polyamides having 4,4'-diaminodicyclohexyl methane and/or its derivatives and aromatic or aliphatic dicarboxylic acids as constituent components, such as "Grilamid" TR90, TR55, TR30, XE4003 (all supplied by EMS-CHEMIE (Japan) Ltd.), "TROGAMIDO" CX7323, CX9701, CX9704 (all supplied by Daicel Evonik Co., Ltd.), and the like.

In particular, it is preferred that an amorphous polyamide is used as the thermoplastic resin constituting the porous material, and that the mass w2 [g/m²] per unit area of the porous material and the amount w1 [g/m²] of the stitching yarn used per unit area of the reinforcing fiber base material are in a relationship of the following equation (1). $1 \leq w 2 / w 1 \leq 5$ (1)

By controlling the ratio of w1 to w2 within such a range, it is possible to simultaneously exhibit room-temperature and moist-heat compression properties, impact resistance, and impregnation property of the matrix resin at high levels.

The reinforcing fiber base material of the present invention may be attached to at least one of its surfaces with a binder resin.

### (Fiber-reinforced composite material)

The reinforcing fiber composite material of the present invention is obtained by impregnating and curing a thermosetting resin into a reinforcing fiber laminate, which is formed by laminating one or more sheets of the reinforcing fiber base material of the present invention. There are no particular restrictions on the molding method of the fiber-reinforced composite material, and exemplified are resin injection molding methods such as RTM and VaRTM, liquid compression molding methods, film infusion methods, hand lay-up methods, and the like. Among these, the reinforcing fiber base material of the present invention can be suitably used in resin injection molding methods.

The resin injection molding method is a method for placing a reinforcing fiber laminate in a mold, injecting a liquid matrix resin into the mold to impregnate it into the reinforcing fiber laminate, and then curing the resin to obtain a fiber-reinforced composite material. The injection temperature and curing temperature of the matrix resin may or may not be the same and are appropriately determined according to the size, shape, and properties of the molded article. In RTM, the matrix resin is injected under pressure into the reinforcing fiber laminate placed in a product-shaped cavity formed in a closed mold. In VaRTM, an open mold and a flexible film (bag) are used, the reinforcing fiber laminate is placed between the rigid open mold and the flexible film, and the matrix resin is impregnated by reducing the pressure inside.

As the matrix resins used in the reinforcing fiber composite material of the present invention, exemplified are epoxy resins, unsaturated polyester resins, vinyl ester resins, phenolic resins, and the like. Among these, it is preferred to use epoxy resins, which are excellent in mechanical properties, heat resistance, and chemical resistance, for the reinforcing fiber composite material of the present invention.

If the coefficient of thermal expansion α_{E} of a cured product of the thermosetting resin used in the fiber-reinforced composite material of the present invention is 100 × 10⁻⁶ or less, a residual stress caused by the difference with the molding temperature that occurs inside the fiber-reinforced composite material after demolding can be suppressed, and further, it is preferred that the α_{E}, and the coefficient of thermal expansion α_{S} of the amorphous resin material constituting the component [B] of the reinforcing fiber base material of the present invention satisfy a relationship of the following equation (2), because this can more effectively suppress microcracks after the cold-hot cycle. $2 \times {α}_{E} < {α}_{S}$ (2)

### Examples

The present invention will be explained in more detail below with reference to examples, but the present invention is not limited to the descriptions in these examples. The materials and evaluation methods used in these examples and comparative examples are as follows.

### <Materials used in components of reinforcing fiber base material>

- Component [A]: Reinforcing fiber used in the fiber-reinforced sheet
   [A]-1: Carbon fiber "Torayca (registered trademark)" T800G-24K-71E
- Component [B]: Thermoplastic resin material used for stitching yarn
   [B]-1: Polyamide 6I,
   [B]-2: Polyamide 6I/12,
   [B]-3: "Grilamid (registered trademark)" TR55,
   [B]-4: "Grilamid (registered trademark)" TR90,
   [B]-5: Polyethylene terephthalate,
   [B]-6: Polyamide 12,
   [B]-7: Polyamide 6/12 (50/50) .

### <Porous material>

In some examples, a nonwoven fabric was used as the porous material. As the thermoplastic resin material constituting the nonwoven fabric, " Grilamid (registered trademark)" TR90 was used. The nonwoven fabric was manufactured using a melt-blow type nonwoven fabric manufacturing apparatus, SWMB-T100 (supplied by Shinwa Kogyo Co., Ltd.).

### <Method for measuring mass per unit area of porous material: w2>

The mass w2 (g/m²) per unit area was measured for the nonwoven fabric prepared according to the above-described <Porous material>. Ten samples of 400mm x 400mm were taken from a 500mm wide roll of wound nonwoven fabric at 1m intervals. The weight of each sample was measured using an electronic balance, and the average value obtained by dividing the weight by the area was taken as w2 (g/m²). The values of the obtained w2 (g/m²) are shown in Tables 1, 2, and 3.

### <Matrix resin>

For resin injection molding of the reinforcing fiber base material, an amine-curable type epoxy resin was used as the matrix resin. The composition of the epoxy resin used is as follows:
- As epoxy, 70 parts by mass of tetraglycidyl diamino diphenylmethane type epoxy ("ARALDITE" (registered trademark) MY-721, supplied by Huntsman Japan Co., Ltd.),
- 30 parts by mass of bisphenol F type epoxy ("EPICRON" (registered trademark) 830 (supplied by DIC Corporation)),
- 59 parts by mass of 4,4'-methylenebis(3-chloro-2,6-diethyl aniline) ("Lonzacure (registered trademark)" M-CDEA (supplied by Lonza Corporation)),
- 25 parts by mass of 4,4'-methylenebis(3,3',5,5'-tetraisopropyl aniline) ("Lonzacure (registered trademark)" M-DIPA (supplied by Lonza Corporation))

### <Method for preparing thermoplastic resin material>

The materials [B]-1 and [B]-2 described in the above-described <Materials used in the components of the reinforcing fiber base material> were prepared by polycondensation under pressurized conditions using an autoclave. For polyamide 6I ([B]-1), a reaction solution prepared by mixing isophthalic acid and hexamethylene diamine in equimolar amounts in an ion-exchanged water used as a solvent was elevated in pressure to 1.7 MPa in an autoclave and reacted at 260°C for 3 hours to obtain amorphous polyamide 6I. For polyamide 6I/12 ([B]-2), isophthalic acid/hexamethylene diamine/laurolactam were compounded at a molar ratio of 1/1/2 so that polyamide 6I and polyamide 12 became 50/50 in copolymerization ratio, it was reacted in an ion-exchanged water solvent under an elevated pressure of 1.7 MPa at 260°C for 5 hours to obtain an amorphous polyamide 6I/12. For polyamide 6/12 (50:50) ([B]-7), ε-caprolactam/laurolactam were compounded at a molar ratio of 1/1 so that polyamide 6 and polyamide 12 became 50/50 in copolymerization ratio, it was reacted in an ion-exchanged water solvent under an elevated pressure of 1.7 MPa at 260°C for 5 hours to obtain a crystalline polyamide 6/12 (50:50).

### <Method for evaluating tensile modulus of thermoplastic resin material used in stitching yarn at 82°C>

The thermoplastic resin material, prepared or purchased according to the above-described <Method for preparing thermoplastic resin material>, was placed on a stainless steel plate with a stainless steel spacer with a thickness of 2 mm, a stainless steel plate preheated to 250°C was stacked on the top, and the material was held in place while being heated and pressurized with a hand press. After cooling to a room temperature, the resin material was taken out and processed into a 1BA type dumbbell-shaped test specimen according to JIS K7161 (1994). The processed test specimen was subjected to humidity control treatment for 30 days at a room temperature (25°C, 50% RH). The humidity-controlled test specimen was subjected to a resin tensile test in a high-temperature environment (82°C) using an Instron universal testing machine (supplied by Instron Corporation), with a chuck distance set to 58 mm and a test speed of 1 mm/min, and the tensile modulus at 82°C was measured. In this case, the value measured with the number of samples of n=8 was employed as a value of the tensile modulus.

### <Method for evaluating shrinkage rate when stitching yarn is held at 130°C>

A test specimen prepared by cutting the stitching yarn prepared according to the <Method for manufacturing stitching yarn> at a length of 600 mm was marked at 500 mm intervals at a state where an initial load of 2.94 mN x (the fineness determined in the <Method for measuring fineness of stitching yarn>) was applied, the test specimen was then suspended in a hot air oven (supplied by ESPEC Corporation) set to 130°C at a state where the initial load was removed, after being left for 30 minutes, taken out, cooled down to a room temperature, then the initial load was applied again, the length between the marks was measured, and the shrinkage rate at 130°C was measured according to the calculation method of the dry dimensional change rate under heating (Method B) of JIS L1013 (2010). In this case, the average value obtained by measuring with the number of samples of n=5 was employed as the value of the shrinkage rate when held at 130°C.

### <Method for measuring glass transition temperature (Tg) of thermoplastic resin material>

The thermoplastic resin material prepared or purchased according to the above-described <Method for preparing thermoplastic resin material> was subjected to Tg measurement using a DSC Q2000 (TA Instruments Co. Ltd.) in accordance with JIS K 7121 (2012), with a heating rate of 10°C per minute.

### <Method for measuring coefficient of thermal expansion α_{E} of matrix resin cured product and α_{S} of thermoplastic resin material>

The matrix resin prepared according to the above-described <Matrix resin> was poured between aluminum plates sandwiching a Teflon (registered trademark) spacer with a thickness of 5 mm and cured in a hot air dryer heated to 180°C for 2 hours to obtain a flat plate comprising a cured matrix resin product. Further, the thermoplastic resin material prepared or purchased according to the above-described <Method for preparing thermoplastic resin material> was placed on a stainless steel plate disposed with a stainless steel spacer having a thickness of 5 mm, and a stainless steel plate preheated to 250°C was stacked on the top, and the plate was held in place while being heated and pressurized with a hand press. After cooling down to a room temperature, the resin material was taken out to obtain a flat plate comprising the thermoplastic resin material. The obtained flat plate was measured for coefficient of thermal expansion in a range of 25°C to 80°C using a TMA Q400 (TA Instruments Co. Ltd.) in accordance with JIS K 7197 (2012).

### <Method for manufacturing stitching yarn>

With respect to the thermoplastic resin material used for component [B]: stitching yarn, described above in <Materials used in components of reinforcing fiber base material>, a multifilament yarn was manufactured by melt spinning.

### <Method for measuring fineness of stitching yarn>

The fineness of the stitching yarn prepared according to the above-described <Method for manufacturing stitching yarn> was measured. The fineness was calculated by measuring the mass of 20 samples, each 90 cm long, according to Method B of JIS L1013 (2010). The finenesses of the obtained stitching yarns are shown in Tables 1, 2 and 3.

### <Method for preparing fiber-reinforced base material>

Two reinforcing fiber sheets in the form of unidirectional sheets were prepared by aligning multiple strands of component [A]-1 described above in <Materials used in components of reinforcing fiber base material> using a multi-axis loom and then they were laminated in the order of -45° and +45° from the bottom. Next, a reinforcing fiber base material was obtained by sewing and integrating the sheets together applying a tricot knit, penetrating in the thickness direction, with the stitching yarn obtained according to the method described above in <Method for manufacturing stitching yarn>. Further, in some examples, a nonwoven fabric obtained according to <Porous material> described above was placed on the upper surface of each reinforcing fiber sheet, and after laminating them in the order of -45°, nonwoven fabric, +45°, nonwoven fabric from the bottom, they were similarly sewn and integrated.

The areal weight of the reinforcing fiber sheet and the amount of stitching yarn used per unit area w1 (g/m²) in the obtained reinforcing fiber base material are as shown in Tables 1, 2 and 3.

### <Method for calculating ratio of the mass per unit area of porous material to stitching yarn>

The ratio of w2/w1 was calculated by dividing the mass w2 (g/m²) per unit area of the porous material (nonwoven fabric) obtained according to the above-described <Porous material> and <Method for preparing fiber-reinforced base material> by the mass w1 per unit area of the stitching yarn.

### <Method for measuring dimensional change rate under heating R_{L120} of reinforcing fiber base material at 120°C >

The reinforcing fiber base material prepared according to the above-described <Method for preparing reinforcing fiber base material> was cut to 200 mm x 200 mm to prepare rectangular test specimens with the reinforcing fibers oriented at +45°/-45°. After measuring the length L_{RT} of the side in the direction in which the stitching yarn was oriented (0°), the test specimen was placed on a bat lined with a nylon film and left for 30 minutes in a hot air oven (supplied by ESPEC Corporation) set at 120°C, the same temperature as the resin injection temperature in VaRTM described later. After taking it out, it was cooled down to a room temperature, and the length L₁₂₀ of the side in the direction in which the stitching yarn was oriented (0°) was measured, the dimensional change rate under heating R_{L120} (%) at 120°C was calculated from the following equation (3) and used as an index of the form stability of the reinforcing fiber base material under high-temperature conditions. Measurements were performed with n=6, and the average value was defined as the dimensional change rate under heating R_{L120} (%) at 120°C. ${R}_{L 120} = \left({L}_{RT}-{L}_{120}\right) / {L}_{RT} \times 100$ (3)

### <Method for preparing reinforcing fiber laminate>

After cutting the reinforcing fiber base material prepared according to the above-described <Method for preparing reinforcing fiber base material> into 400 mm x 400 mm, a laminate was prepared so as to achieve the following lamination structure.

For compression after impact (CAI), open-hole compression (OHC), and cold-hot cycle durability tests, the structure was set to [(+45°/-45°/0°/90°)] _{2S}.

### <Method for molding fiber-reinforced composite material: VaRTM>

The laminate prepared according to the above-described <Method for preparing reinforcing fiber laminate> was placed on an aluminum tool plate, the entire structure was covered with a polyamide bag film, and at a state where the inside of the film was vacuum-sucked, the laminate was heated in a hot air dryer set at 120°C. After confirming that the temperature of the laminate reached 120°C, the resin composition was injected using the pressure difference with atmospheric pressure. After the epoxy resin composition was impregnated, the temperature of the laminate was elevated to 180°C while continuing to reduce the pressure and the laminate was heat-cured for 2 hours to obtain a molded article. This molding method is Vacuum-assisted Resin Transfer Molding (VaRTM).

### <Method for molding fiber-reinforced composite material: RTM method>

The laminate prepared according to the above-described <Method for preparing reinforcing fiber laminate> was placed on the lower mold of a carbon steel double-sided mold, the upper mold was closed and pressurized, and at a state where the inside of the mold was vacuum-sucked, it was heated to 180°C. Subsequently, the matrix resin was injected under pressure through the injection port, and then it was heated and cured for 2 hours to obtain a molded article. The molding temperature and injection pressure are shown in Tables 1, 2, and 3. This molding method is Resin Transfer Molding (RTM) method.

### <CAI test Method>

A laminate for CAI, prepared according to the above-described <Method for preparing reinforcing fiber laminate> was heat-cured according to the above-described <Method for molding fiber-reinforced composite material: VaRTM> or <Method for molding fiber-reinforced composite material: RTM> to obtain a molded article. A rectangular test specimen measuring 150 mm × 100 mm was cut out from the obtained molded article, and a drop weight impact of 8 J per 1 mm thickness of the test specimen was applied to the center of the test specimen according to ASTM D7136, and then the residual compressive strength was measured according to the test standard ASTM D713 7. The measurements were performed with n=6, and the average value was taken as the CAI strength (MPa).

### <Room-temperature OHC test method>

The laminate for OHC prepared according to the above-described <Method for preparing reinforcing fiber laminate> was heat-cured according to the above-described <Method for molding fiber-reinforced composite material: VaRTM> or <Method for molding fiber-reinforced composite material: RTM> to obtain a molded article. A rectangular test specimen measuring 305 mm × 38 mm was cut out from the obtained molded article, and a test specimen drilled with a hole having a diameter of 6.35 mm in the center of the test specimen was prepared. Compression tests were performed with n=6 according to the test standard ASTM D6484, and the average value was taken as the room-temperature OHC strength (MPa).

### <Moist-heat OHC test method>

Similarly to the <Room-temperature OHC test method> described above, a rectangular specimen measuring 305 mm x 38 mm was prepared with a 6.35 mm hole in the center, and it was immersed in hot water heated to 70°C for two weeks. The immersed test specimen was then subjected to a compression test with n=6 in a high-temperature environment of 82°C according to the test standard ASTM D6484, and the average value was taken as the moist-heat OHC strength (MPa).

### <Cold-hot cycle durability test method>

A laminate for the cold-hot cycle durability test, prepared according to the above-described <Method for preparing reinforcing fiber laminate> was heat-cured according to the above-described <Method for molding fiber-reinforced composite material: VaRTM> or <Method for molding fiber-reinforced composite material: RTM> to obtain a molded article. A test specimen measuring 80 mm × 80 mm was cut out from the obtained molded article, and it was exposed to a moist-heat environment (50°C, 99% RH) for 12 hours. The exposed test specimen was subjected to a cold-hot cycle from -55°C to 70°C continuously 2,000 times. In this cycle, a temperature holding time of 15 minutes was provided after reaching -55°C and 70°C. After the completion of the cold-hot cycle, the cross-section of the test specimen was cut out and observed at a magnification of 200 times using a VHX6000 to measure the number of generated cracks.

### <Method for evaluating surface quality>

The laminate for CAI, prepared according to the above-described <Method for preparing reinforcing fiber laminate> was heat-cured according to the above-described <Method for molding fiber-reinforced composite material: VaRTM> or <Method for molding fiber-reinforced composite material: RTM> to obtain a molded article. The surface quality of the obtained molded article was evaluated according to the following criteria.
C: Surface voids, damage to the surface of the stitching yarn were present.
B: No surface voids, but damage to the surface of the stitching yarn was present.
A: No surface voids, no damage to the surface of the stitching yarn surface were present.

### <Method for measuring impregnation time and fiber volume content>

When a resin was injected into the laminate for CAI, prepared according to the above-described <Method for preparing reinforcing fiber laminate> was heat-cured according to the above-described <Method for molding fiber-reinforced composite material: VaRTM> or <Method for molding fiber-reinforced composite material: RTM>, the time it took for the resin to reach the suction port from the injection port was defined as impregnation time (minutes). Further, the fiber volume content (Vf) of the molded article was calculated as Vf (%) by dividing the weight of the CF residue after decomposition by the weight of the test specimen before decomposition, according to the nitric acid decomposition method described in JIS K7075 (1991).

### (Example 1)

A stitching yarn (component [B]) made of PA6I with a fineness of 75 dtex was prepared according to the above-described <Method for preparing thermoplastic resin material> and <Method for manufacturing stitching yarn>. When the tensile modulus of PA6I at 82°C was evaluated according to the above-described <Method for evaluating tensile modulus of thermoplastic resin material used in stitching yarn at 82°C>, it was 1.3 GPa.

Using the prepared stitching yarn and "Torayca (registered trademark)" T800G-24K-71E as the reinforcing fiber, a reinforcing fiber base material was prepared in the form of a so-called biaxial NCF, where the fiber axes of the aligned carbon fibers of the reinforcing fiber sheet (component [A]) were laminated in the order of -45° and +45°, according to the <Method for preparing fiber-reinforced base material>. The amount of stitching yarn used per unit area w1 was 8 g/m². Next, a reinforcing fiber laminate was prepared according to the <Method for preparing reinforcing fiber laminate>, and molded articles for CAI evaluation, OHC evaluation, in-plane shear evaluation, and cold-hot cycle durability test were prepared at a curing temperature of 180°C according to the above-described <Method for molding fiber-reinforced composite material: VaRTM>.

Where, when the prepared reinforcing fiber base material was evaluated according to the above-described <Method for measuring dimensional change rate under heating R_{L120} of reinforcing fiber base material at 120°C >, the dimensional change rate under heating R_{L120} was 0%, indicating excellent form stability under a high-temperature environment. Further, α_{E} measured according to the above-described <Method for measuring coefficient of thermal expansion α_{E} of matrix resin cured product and α_{S} of thermoplastic resin material> was 30 x 10⁻⁶, and α_{S} was 80 x 10⁻⁶.

When the obtained molded article was evaluated according to the above-described <CAI test method>, <Room-temperature OHC test method>, <Moist-heat OHC test method>, and <Cold-hot cycle durability test method>, the CAI strength was 190 MPa, the room-temperature OHC strength was 280 MPa, and the moist-heat OHC strength was 240 MPa, showing excellent compression properties, especially in a moist-heat environment. Furthermore, the number of cracks after the cold-hot cycle durability test was only one, which was excellent.

Furthermore, when the surface quality of the molded article was evaluated according to the above-described <Method for evaluating surface quality>, it was determined as Rank A, which was good. The impregnation time, measured according to the above-described <Method for measuring impregnation time and fiber volume content>, was 5 minutes, indicating an excellent impregnation property. Further, the Vf of this molded article was 57.0%.

### (Examples 2-6, 8, 10)

Except for changing the type of resin material constituting the stitching yarn, the fineness of the stitching yarn, and the amount of stitching yarn used per unit area of the reinforcing fiber base material w1 as shown in Tables 1 and 2, a reinforcing fiber base material and a reinforcing fiber laminate were prepared in the same manner as in Example 1 (each data is shown in Tables 1 and 2). Next, fiber-reinforced composite materials were prepared using VaRTM in the same manner as in Example 1, and the CAI strength, cold-heat cycle durability and room temperature and moist-heat OHC were evaluated for each Example. As a result, excellent physical properties were obtained, particularly in OHC strength under a moist-heat environment, and a high level of crack resistance after cold-heat cycle was achieved together. Further, the impregnation times for respective Examples were 4.0 to 15.0 minutes, showing excellent impregnation properties in VaRTM. Furthermore, the surface qualities of the molded articles were good.

### (Examples 7 and 9)

Except for changing the type of resin material constituting the stitching yarn, the fineness of the stitching yarn and the amount of stitching yarn used per unit area of the reinforcing fiber base material w1 as shown in Tables 1 and 2, the reinforcing fiber base material and the reinforcing fiber laminate were prepared in the same manner as in Example 1 (each data is shown in Tables 1 and 2). Next, the reinforcing fiber composite material was prepared according to the above-described <Method for molding fiber-reinforced composite material: RTM>, and the CAI strength, cold-heat cycle durability, and room temperature and moist-heat OHC were evaluated for each Example. As a result, excellent physical properties were obtained, particularly in OHC strength under a moist-heat environment, and a high level of crack resistance after cold-heat cycle was achieved together. Further, the impregnation times for respective Examples were both 3.0 minutes, showing excellent impregnation properties even in RTM. Furthermore, the surface qualities of the molded articles were good.

### (Examples 11 and 12)

The nonwoven fabric prepared according to the above-described <Porous Material> was placed on the upper surface of the reinforcing fiber sheet as described in <Method for preparing reinforcing fiber base material>, and the layers were stacked in the order of -45°, nonwoven fabric, +45°, nonwoven fabric, and then stitched and integrated with a stitching yarn to prepare a reinforcing fiber base material (each data is shown in Table 2). The mass w2 per unit area of the nonwoven fabric and the amount of stitching yarn w1 used per unit area of the reinforcing fiber base material, measured according to the above-mentioned <Method for measuring mass w2 per unit area of porous material>, are shown in Table 2, and the w2/w1 ratios were 0.75 and 6, respectively.

Using the prepared reinforcing fiber base material, a reinforcing fiber laminate was prepared in the same manner as in Example 1. Next, fiber-reinforced composite materials were prepared using VaRTM in the same manner as in Example 1, and the CAI strength, cold-hot cycle durability, and room-temperature and moist-heat OHC were evaluated for each Example. As a result, high CAI strength and OHC strength under a moist-heat environment, and further, crack resistance after cold-hot cycle, were obtained, achieving impact resistance, compression properties under a moist-heat environment, and further, durability, together. Further, the surface qualities of the molded articles were good.

### (Examples 13 and 14)

Reinforcing fiber base materials were prepared in the same manner as in Examples 11 and 12, except that the stitching yarn and nonwoven fabric composition were changed as shown in Table 2 (each data is shown in Table 2). In this case, the ratios of w2/w1 were set to 1.5 and 4, and within the range of 1 to 5.

Using the prepared reinforcing fiber base materials, reinforcing fiber laminates were prepared in the same manner as in Example 1. Next, fiber-reinforced composite materials were prepared using VaRTM in the same manner as in Example 1, and the CAI strength, cold-hot cycle durability, and room-temperature and moist-heat OHC were evaluated for each Example. As a result, high CAI strength, particularly high moist-heat OHC strength, and crack resistance after cold-hot cycle were obtained. Furthermore, the impregnation time was 6.0 to 8.0 minutes, exhibiting high impregnation properties in VaRTM. Namely, impact resistance, compression properties in a moist-heat environment, durability, and impregnation property were achieved together at a particularly high level. Further, the surface qualities of the molded articles were good.

### (Comparative Example 1)

As a thermoplastic resin material constituting the component [B], PA6/12 (50:50), which was a crystalline resin, was used. As the result of evaluating the tensile modulus at 82°C, it was 0.3 GPa, which was outside the range of condition 2. Using the components shown in Table 3, a fiber-reinforced composite material was prepared in the same manner as in Example 1, and the CAI strength, cold-hot cycle durability, and room-temperature and moist-heat OHC were evaluated. The number of cracks after cold-hot cycle durability test was only one, indicating excellent durability, but the moist-heat OHC was 210 MPa, which was insufficient. Further, the stitching yarn on the surface of the molded article adhered to the mold at the time of molding, and damage was found on the surface of the stitching yarn, resulting in the determination of the surface quality of the molded article to be rank B.

### (Comparative Example 2)

A fiber-reinforced composite material was prepared in the same manner as in Comparative Example 1, except that the fiber-reinforced composite material was prepared by RTM, and the CAI strength, cold-hot cycle durability, and room-temperature and moist-heat OHC were evaluated. The number of cracks after cold-hot cycle durability test was only one, indicating excellent durability, but the moist-heat OHC was 210 MPa, which was insufficient. Further, because the matrix resin was injected at a temperature exceeding the melting point of the stitching yarn, voids were observed near the stitching yarn on the surface, and further, damage was observed on the surface of the stitching yarn due to stitch adhesion to the mold. By this, the surface quality of the molded article was determined to be rank C, which was low.

### (Comparative Example 3)

PA6I/12, which was an amorphous resin, was used as the thermoplastic resin material constituting the component [B]. As the result of evaluating the tensile modulus at 82°C, it was 0.7 GPa, which was outside the range of condition 2. Using the components shown in Table 3, a fiber-reinforced composite material was prepared in the same manner as in Comparative Example 1, and the CAI strength, cold-hot cycle durability, and room-temperature and moist-heat OHC were evaluated. The number of cracks after the cold-hot cycle durability test was 0, indicating excellent durability, but the moist-heat OHC was 200 MPa, which was insufficient. Furthermore, the surface quality of the molded article was determined to be rank B.

### (Comparative Example 4)

PA12, which was a crystalline resin, was used as the thermoplastic resin material constituting the component [B]. As the result of evaluating the tensile modulus at 82°C, it was 0.5 GPa, which was outside the range of condition 2. Using the components shown in Table 3, a fiber-reinforced composite material was prepared in the same manner as in Comparative Example 1, and the CAI strength, cold-hot cycle durability, and room-temperature and moist-heat OHC were evaluated. The surface quality of the molded article was determined to be rank A which was high, but the moist-heat OHC was 225 MPa which was insufficient. Further, the number of cracks after the cold-hot cycle durability test was 10, indicating insufficient durability.

### (Comparative Example 5)

Polyethylene terephthalate, which was a crystalline polyester resin, was used as the thermoplastic resin material constituting the component [B]. As the result of evaluating the tensile modulus at 82°C, it was 0.8 GPa, which was outside the range of condition 2. Using the components shown in Table 3, a fiber-reinforced composite material was prepared in the same manner as in Comparative Example 1, and the CAI strength, cold-hot cycle durability, and room-temperature and moist-heat OHC were evaluated. The surface quality of the molded article was determined to be rank A which was high, but the moist-heat OHC was 225 MPa which was insufficient. Further, the number of cracks after the cold-hot cycle durability test was 50, indicating insufficient durability.

**[Table 1]**

| | | Example 1 | Example 2 | Example 3 | Example 4 | Example 5 | Example 6 | Example 7 |
|---|---|---|---|---|---|---|---|---|
| Components [A] reinforcing fiber sheet | Type of reinforcing fiber | T800G | T800G | T800G | T800G | T800G | T800G | T800G |
| | Areal weight (g/m²) | 300 | 300 | 300 | 300 | 300 | 300 | 300 |
| Component [B] stitching yarn | Type of resin material constituting stitching yarn | PA61 | PA61 | TR55 | TR90 | TR90 | TR90 | TR90 |
| | Condition 2: Tensile modulus of resin material constituting stitching yarn at 82°C (GPa) | 1.3 | 1.3 | 1.7 | 1.2 | 1.2 | 1.2 | 1.2 |
| | Condition 3: Shrinkage rate of stitching yarn when held at 130°C (%) | 9 | 9 | 4 | 5 | 5 | 5 | 5 |
| | Tg of resin material constituting stitching yarn (°C) | 130 | 130 | 160 | 155 | 155 | 155 | 155 |
| | Melting point Tm of resin material constituting stitching yarn (°C) | - | - | - | - | - | - | - |
| | Coefficient of thermal expansion αS of resin material constituting stitching yarn (×10⁻⁶) | 80 | 80 | 81 | 88 | 88 | 88 | 88 |
| | Fineness (dtex) | 75 | 55 | 75 | 75 | 15 | 55 | 55 |
| | Amount of stitching yarn used per unit area of reinforcing fiber base material: w1 [g/m²] | 8 | 6 | 8 | 8 | 2 | 6 | 6 |
| Nonwoven fabric | Type of thermoplastic resin constituting nonwoven fabric | - | - | - | - | - | - | - |
| | Mass per unit area w2 [g/m²] | - | - | - | - | - | - | - |
| Matrix resin | Coefficient of thermal expansion αE of matrix resin cured product (×10 ⁶) | 30 | 30 | 30 | 30 | 30 | 30 | 30 |
| w2/w1 | | - | - | - | - | - | - | - |
| Molding method of CFRP | Molding method | VaRTM | VaRTM | VaRTM | VaRTM | VaRTM | VaRTM | RTM |
| | Resin injection temperature (°C) | 120 | 120 | 120 | 120 | 120 | 120 | 180 |
| | Injection pressure (MPa) | 0.1 | 0.1 | 0.1 | 0.1 | 0.1 | 0.1 | 0.2 |
| Evaluation result of property of reinforcing fiber base material | Dimensional change rate under heating at 120°C R₁₂₀ (%) | 0 | 0 | 0 | 0 | 0 | 0 | 0 |
| Molding result of reinforcing fiber composite material | Fiber volume content Vf (%) | 57 | 60 | 56 | 56 | 62 | 58 | 60 |
| | Impregnation time (min.) | 5 | 6 | 4 | 4 | 15 | 5 | 3 |
| | Surface quality (A: no void and no damage, B: void in stitching portion, C: void and damage in stitching portion) | A | A | A | A | A | A | A |
| Properties of reinforcing fiber composite material | CAI strength (MPa) | 190 | 195 | 200 | 200 | 200 | 205 | 206 |
| | Room-temperature OHC strength (MPa) | 280 | 285 | 290 | 290 | 320 | 300 | 303 |
| | Moist-heat OHC strength (MPa) | 240 | 245 | 255 | 250 | 280 | 265 | 266 |
| | Number of cracks after cold-hot cycle durability test (number) | 1 | 1 | 0 | 0 | 0 | 0 | 0 |

**[Table 2]**

| | | Example 8 | Example 9 | Example 10 | Example 11 | Example 12 | Example 13 | Example 14 |
|---|---|---|---|---|---|---|---|---|
| Components [A] reinforcing fiber sheet | Type of reinforcing fiber | T800G | T800G | T800G | T800G | T800G | T800G | T800G |
| | Areal weight (g/m²) | 300 | 300 | 300 | 300 | 300 | 300 | 300 |
| Component [B] stitching yarn | Type of resin material constituting stitching yarn | TR90 | TR90 | TR90 | TR90 | TR90 | TR90 | TR90 |
| | Condition 2: Tensile modulus of resin material constituting stitching yarn at 82°C (GPa) | 1.2 | 1.2 | 12 | 1.2 | 1.2 | 12 | 12 |
| | Condition 3: Shrinkage rate of stitching yarn when held at 130°C (%) | 5 | 5 | 5 | 5 | 5 | 5 | 5 |
| | Tg of resin material constituting stitching yarn (°C) | 155 | 155 | 155 | 155 | 155 | 155 | 155 |
| | Melting point Tm of resin material constituting stitching yarn (°C) | - | - | - | - | - | - | - |
| | Coefficient of thermal expansion αS of resin material constituting stitching yarn (×10 ⁶) | 88 | 88 | 88 | 88 | 88 | 88 | 88 |
| | Fineness (dtex) | 38 | 38 | 23 | 55 | 23 | 38 | 23 |
| | Amount of stitching yarn used per unit area of reinforcing fiber base material: w1 [g/m²] | 4 | 4 | 3 | 8 | 2 | 4 | 2 |
| Nonwoven fabric | Type of thermoplastic resin constituting nonwoven fabric | - | - | - | TR90 | TR90 | TR90 | TR90 |
| | Mass per unit area w2 [g/m²] | - | - | - | 6 | 12 | 6 | 8 |
| Matrix resin | Coefficient of thermal expansion αE of matrix resin cured product (×10⁻⁶) | 30 | 30 | 30 | 30 | 30 | 30 | 30 |
| w2/w1 | | - | - | - | 0.75 | 6 | 1.5 | 4 |
| Molding method of CFRP | Molding method | VaRTM | RTM | VaRTM | VaRTM | VaRTM | VaRTM | VaRTM |
| | Resin injection temperature (°C) | 120 | 180 | 120 | 120 | 120 | 120 | 120 |
| | Injection pressure (MPa) | 0.1 | 0.2 | 0.1 | 0.1 | 0.1 | 0.1 | 0.1 |
| Evaluation result of property of reinforcing fiber base material | Dimensional change rate under heating at 120°C R₁₂₀ (%) | 0 | 0 | 0 | 0 | 0 | 0 | 0 |
| Molding result of reinforcing fiber composite material | Fiber volume content Vf(%) | 59 | 60 | 60 | 56 | 55 | 57 | 57 |
| | Impregnation time (min.) | 5 | 3 | 6 | 6 | 18 | 6 | 8 |
| | Surface quality (A: no void and no damage. B: void in stitching portion, C: void and damage in stitching portion) | A | A | A | A | A | A | A |
| Properties of reinforcing fiber composite material | CAI strength (MPa) | 210 | 208 | 210 | 300 | 305 | 300 | 305 |
| | Room-temperature OHC strength (MPa) | 305 | 310 | 310 | 280 | 315 | 300 | 310 |
| | Moist-heat OHC strength (MPa) | 210 | 272 | 276 | 240 | 270 | 265 | 265 |
| | Number of cracks after cold-hot cycle durability test (number) | 0 | 0 | 0 | 0 | 0 | 0 | 0 |

**[Table 3]**

| | | Comparative Example 1 | Comparative Example 2 | Comparative Example 3 | Comparative Example 4 | Comparative Example 5 |
|---|---|---|---|---|---|---|
| Components [A] reinforcing fiber sheet | Type of reinforcing fiber | T800G | T800G | T800G | T800G | T800G |
| | Areal weight (g/m²) | 300 | 300 | 300 | 300 | 300 |
| Component [B] stitching yarn | Type of resin material constituting stitching yarn | PA6/12 (50/50) | PA6/12 (50/50) | PA6I/12 | PA12 | PET |
| | Condition 2: Tensile modulus of resin material constituting stitching yarn at 82°C (GPa) | 0.3 | 0.3 | 0.7 | 0.5 | 0.8 |
| | Condition 3: Shrinkage rate of stitching yarn when held at 130°C (%) | 25 | 25 | 20 | 9 | 1 |
| | Tg of resin material constituting stitching yarn (°C) | 40 | 40 | 70 | 40 | 70 |
| | Melting point Tm of resin material constituting stitching yarn (°C) | 140 | 140 | - | 178 | 250 |
| | Coefficient of thermal expansion αS of resin material constituting stitching yarn (×10⁻⁶) | 90 | 90 | 70 | 100 | 58 |
| | Fineness (dtex) | 38 | 38 | 38 | 38 | 23 |
| | Amount of stitching yarn used per unit area of reinforcing fiber base material: w1 [g/m²] | 4 | 4 | 4 | 4 | 4 |
| Nonwoven fabric | Type of thermoplastic resin constituting nonwoven fabric | - | - | - | - | - |
| | Mass per unit area w2 [g/m²] | - | - | - | - | - |
| Matrix resin | Coefficient of thermal expansion αE of matrix resin cured product (×10⁻⁶) | 30 | 30 | 30 | 30 | 30 |
| w2/w1 | | | - | - | - | - |
| Molding method of CFRP | Molding method | VaRTM | RTM | VaRTM | VaRTM | VaRTM |
| | Resin injection temperature (°C) | 120 | 180 | 120 | 120 | 120 |
| | Injection pressure (MPa) | 0.1 | 0.2 | 0.1 | 0.1 | 0.1 |
| Evaluation result of property of reinforcing fiber base material | Dimensional change rate under heating at 120°C R₁₂₀ (%) | 5 | 5 | 4 | 0 | 0 |
| Molding result of reinforcing fiber composite material | Fiber volume content Vf (%) | 59 | 60 | 59 | 59 | 58 |
| | Impregnation time (min.) | 10 | 7 | 10 | 5 | 4 |
| | Surface quality (A: no void and no damage. B: void in stitching portion, C: void and damage in stitching portion) | B | C | B | A | A |
| Properties of reinforcing fiber composite material | CAI strength (MPa) | 210 | 212 | 215 | 200 | 195 |
| | Room-temperature OHC strength (MPa) | 270 | 270 | 265 | 300 | 300 |
| | Moist-heat OHC strength (MPa) | 210 | 210 | 200 | 225 | 225 |
| | Number of cracks after cold-hot cycle durability test (number) | 1 | 1 | 0 | 10 | 50 |

### Industrial Applicability

The reinforcing fiber base material of the present invention is excellent in impregnation property in a resin injection molding, and the fiber-reinforced composite material obtained by combining it with a matrix resin can achieve a high level of both compressive strength in a moist-heat environment and crack resistance after a cold-hot cycle, and therefore, it can be suitably used for aircraft components, especially large primary structural components.

Specifically, it can be suitably used in many structural materials, such as aircraft components including fuselages, main wings, tail wings, control surfaces, fairings, cowlings, doors, seats, and interior materials; spacecraft components including motor cases and main wings; satellite components including bodies and antennas; automobile components including outer panels, chassis, aerodynamic components, and seats; railway vehicle components including bodies and seats; and ship components including hulls and seats. In particular, because it achieves, at a high level, both compressive strength in moist-heat environments and high crack resistance against cold-hot cycles, and because the reinforcing fiber base material of the present invention exhibits a good impregnation property in a resin injection molding, it can be suitably used in aircraft components, especially large primary structural components.

### Explanation of symbols

1A: reinforcing fiber base material
1B: reinforcing fiber base material
2: stitching yarn
3: supporting yarn
11: reinforcing fiber sheet (-45 degrees)
12: reinforcing fiber sheet (90 degrees)
13: reinforcing fiber sheet (+45 degrees)
14: reinforcing fiber sheet (0 degree)
15: reinforcing fiber sheet

## Claims

1. A reinforcing fiber base material comprising one or more components [A] each formed by aligning reinforcing fibers in one direction, integrated with a component [B], and simultaneously satisfying the following condition 1 and at least one of condition 2 or condition 3.
[A]: reinforcing fiber sheet
[B]: stitching yarn
Condition 1: The component [B] is made of an amorphous resin material.
Condition 2: The tensile modulus of the amorphous resin material constituting the component [B] at 82°C is 1 GPa or more.
Condition 3: The shrinkage rate of component [B] when held at 130°C is less than 10%.

2. The reinforcing fiber base material according to claim 1, wherein the amorphous resin material constituting the component [B] is an amorphous polyamide.

3. The reinforcing fiber base material according to claim 2, wherein the glass transition temperature of the amorphous resin material constituting the component [B] is 140 to 165°C.

4. The reinforcing fiber base material according to claim 1, wherein the fineness of the component [B] is 20 to 60 dtex.

5. The reinforcing fiber base material according to claim 1, wherein a porous material comprising a thermoplastic resin is disposed on at least one surface of the component [A].

6. The reinforcing fiber base material according to claim 5, wherein the thermoplastic resin constituting the porous material is an amorphous polyamide, and the mass w2 [g/m²] per unit area of the porous material and the amount w1 [g/m²] of the component [B] used per unit area of the reinforcing fiber base material according to claim 5 are in a relationship of the following equation (1). $1 \leq w 2 / w 1 \leq 5$ (1)

7. A reinforcing fiber composite material obtained by impregnating and curing a thermosetting resin into a reinforcing fiber laminate formed by laminating a plurality of reinforcing fiber base materials according to any one of claims 1 to 6.

8. The reinforcing fiber composite material according to claim 7, wherein the coefficient of thermal expansion α_{E} of a cured product of the thermosetting resin is 100 × 10⁻⁶ or less, and the relationship with the coefficient of thermal expansion α_{S} of the amorphous resin material constituting the component [B] satisfies a relationship of the following equation (2). $2 \times {α}_{E} < {α}_{S}$ (2)
